# EUROPEAN PATENT APPLICATION

(11) **EP 2 213 977 A1**
(43) Date of publication of application: **04.08.2010**
(21) Application number: 09180881.6
(22) Date of filing: 29.12.2009
(51) Int. Cl.: G01B 15/02

(54) **Device for measuring thickness of paint film in non-contacting manner**

(30) Priority: 03.02.2009 JP 2009022464
(71) Applicant: AISIN SEIKI KABUSHIKI KAISHA, Kariya-shi, Aichi 448-8650 (JP)
(72) Inventor: Ohtake, Hideyuki, Kariya-shi Aichi 448-8650 (JP)
(74) Representative: TBK-Patent

(57) **Abstract**

A non-contacting type paint film thickness measuring device includes a paint film thickness measuring unit (17) having a terahertz pulse light generating portion (1) for generating a terahertz pulse light, a first optical system (5) for collimating and focusing an incident terahertz pulse light that is the terahertz pulse light generated by the terahertz pulse light generating portion (1) to an object (20) whose paint film thickness is measured, a second optical system (6) for receiving a terahertz echo pulse that is the incident terahertz pulse light collimated and focused to the object (20) in the first optical system (5) and reflected at the object (20), a pulse width shortening portion (15) for shortening a pulse width of the terahertz echo pulse, and a detecting portion (7) for detecting electric field amplitude-time resolved waveform of the terahertz echo pulse whose pulse width is shortened by the pulse width shortening portion (15).

## Description

### TECHNICAL FIELD

This disclosure relates to a device for measuring a thickness of a paint film formed on a substrate, especially for measuring a thickness of a paint film in a non-contacting manner by applying a terahertz pulse light to an object whose paint film thickness is measured.

### BACKGROUND DISCUSSION

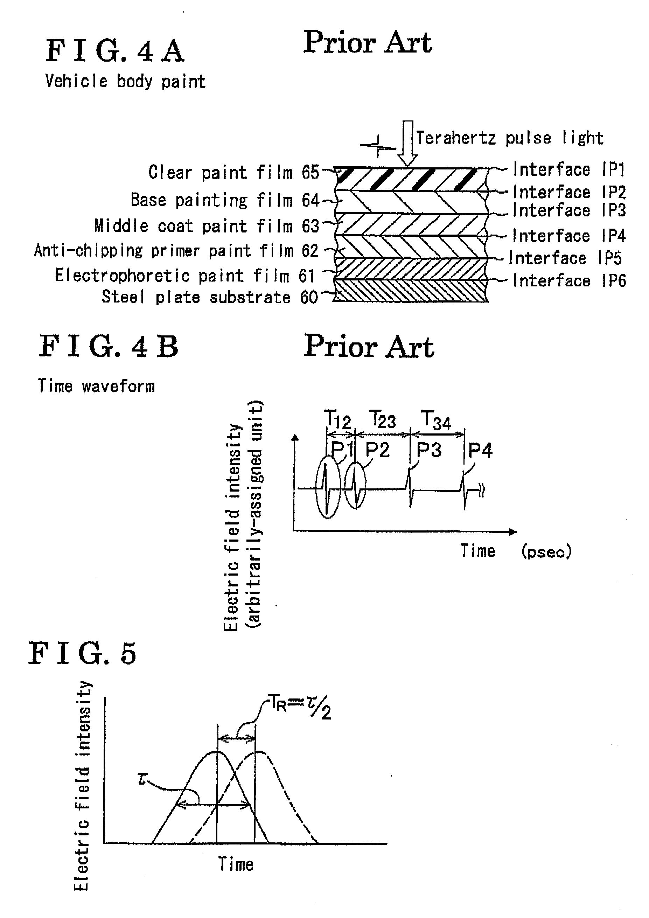

For aesthetic purposes, paint is applied to industrial products such as an automobile, home electric appliances and the like. For example, as illustrated in a drawing of Fig. 4A, a metallic painted automobile includes a steel plate substrate 60 to which an electrophoretic paint film 61 is formed in order to prevent corrosion and the like. Further, an anti-chipping primer paint film 62 is formed on the electrophoretic paint film 61 in order to prevent the automobile body from damage of flying gravel or the like. Further, a middle coat paint film 63 is formed on the anti-chipping primer paint film 62, a base painting film 64 including a pigment and flake pigments is formed on the middle coat paint film 63, and a clear paint film 65 not including the pigment and flake pigments is formed on the base painting film 64. The electrophoretic paint film 61 is formed for corrosion prevention of the substrate, and the anti-chipping primer paint film 62 is formed for preventing the substrate from the damage caused by the flying gravel or the like. A paint firm thickness of each paint films needs to be measured and properly controlled because the corrosion prevention function and the damage preventing function may be deteriorated when the paint film thickness is less than a set thickness. Further, the middle coat paint film 63, the base paint film 64 and the clear paint film 65 are closely-associated to the appearance (e.g., color, degree of metallic, brilliance, orange peel and depth of color) of the product. Accordingly, the paint film thickness of each film needs to be measured and properly controlled.

Generally, a thickness of each paint film is measured in a manner where the paint film is firstly dried and measured by means of an eddy current paint film thickness measuring device. However, the eddy current paint film thickness measuring device may cause damage to the product and may not measure paint film thicknesses of multiple layers.

A non-contacting type paint film thickness measuring device based on an optical interference has been developed in order to reduce the damage caused to the product, however, such device may not measure each paint film thickness of the multiple layers (JP3542346B and JP3326961B).

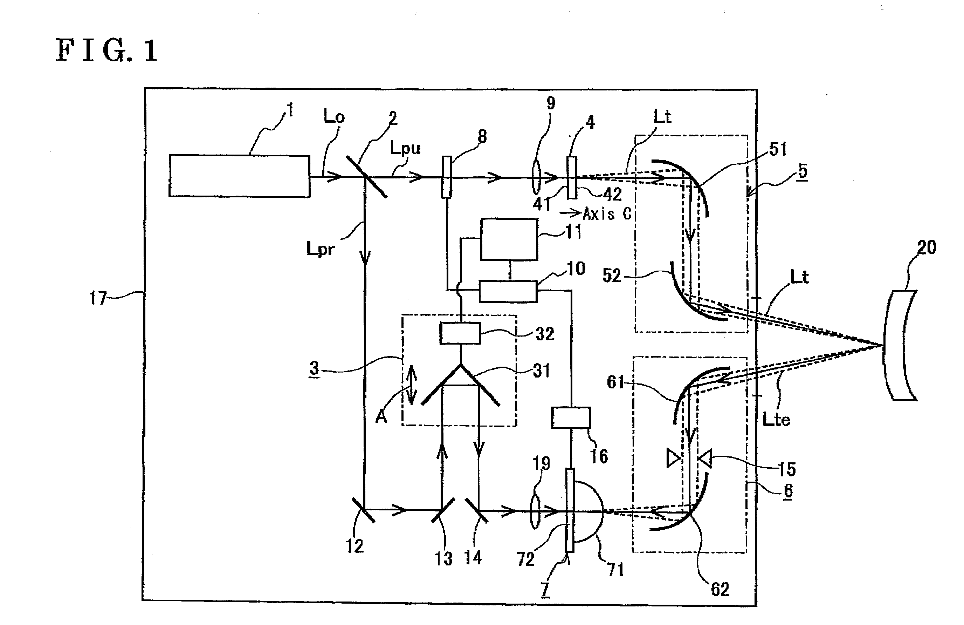

Further, another non-contacting type paint film thickness measuring device emitting a terahertz pulse light to an object whose paint film thickness is measured has been developed in response to the abovementioned matters (JP2004-28618A, P6-7, Figs. 1, 5 and 6). The terahertz pulse light is an electromagnetic wave whose wavelength is 30 to 3000 µm and frequency is 0.1 to 10THz. The terahertz pulse light passes through a paint film whose main element is a high-polymer material. When the terahertz pulse light is emitted to an object made of plural paint layers indicated in Fig. 4A, the terahertz pulse light is reflected (Fresnel reflection) on each interface IP1 through IP5, each has a discontinuous refractive index, and a reflected terahertz pulse light (hereinafter referred to as a terahertz echo pulse light) is obtained. Electric field amplitude-time resolved waveform of the terahertz echo pulse light is schematically indicated in the graph of Fig. 4B. The paint film thickness of each paint film is calculated by a formula (1) on the basis of a Time of Flight method using a time difference T1 2 between echo pulses P1 and P2, a time difference T2 3 between echo pulses P2 and P3, and a time difference T3 4 between echo pulses P3 and P4. The echo pulses P1, P2, P3 and P4 appear in the graph of Fig. 4B so as to be adjacent each other.

Paint film thickness = (time difference × light speed)/(paint film's group refractive index) (1)

When the paint film thickness is calculated on the basis of the time difference between the adjacent echo pulses, because an optical resolution for measuring the paint film thickness is determined on the basis of a pulse width of the echo pulse, an optical resolution "R" is expressed by the following formula on the basis of the formula (1), in which the pulse width is "τ", a paint film's group refractive index is "n", and a light speed is "c".

R = τc / n

In other words, as shown in the graph of Fig. 5 indicating the terahertz echo pulse light, a minimum time difference, in which adjacent signals of echo pulses are distinguishable, is expressed as TR =τ/2. Accordingly, in order to increase the optical resolution for measuring a paint film thickness, the pulse width of the terahertz echo pulse light needs to be shortened.

The pulse width of the terahertz echo pulse is approximately identical to that of the terahertz pulse light emitted to the object. Because the terahertz pulse light is generally generated by the effect χ (2) of the nonlinear crystal being pumped with the short pulse laser light, the pulse width of the generated terahertz pulse light is determined depending on the pulse width of the pumping light. Accordingly, in order to obtain a desired optical resolution for measuring the paint film thickness, a terahertz pulse light whose pulse width corresponds to the desired optical resolution needs to be emitted to the object.

According to the abovementioned known paint film thickness measuring device disclosed in JP2004-28618A, a terahertz pulse light whose pulse width "τ" is 400fs is used (see Fig. 5 in JP2004-28618A), and when an object whose refractive index "n' is 2 is measured, an optical resolution "R" is estimated to 60 µm. In other words, the known paint film thickness measuring device may not measure an object whose paint film thickness is less than 60 µm.

On the other hand, when a paint film formed on a nonplanar object is measured, a level of the optical resolution may be reduced, in other words, the pulse width of the terahertz echo pulse reflected on the nonplanar object may be elongated. Because most of industrial products have a nonplanar surface, the pulse width of the terahertz echo pulse is increased. As a result, the level of the optical resolution for measuring the paint film thickness may be reduced.

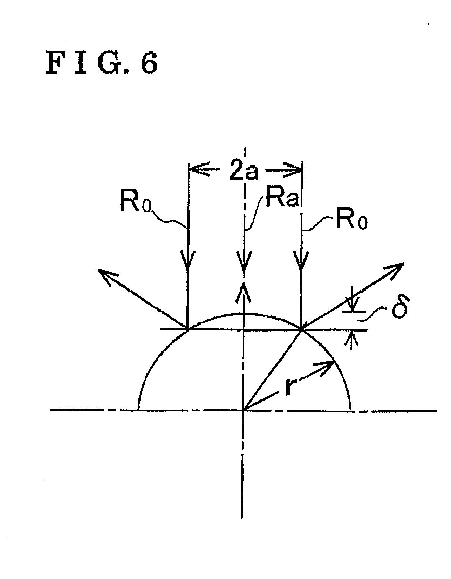

For example, as indicated in Fig. 6, when a terahertz pulse light whose beam radius is 2a is emitted toward a surface whose curvature radius is r, there is an optical path difference of 2 δ in reciprocating between a center ray Ra and an each of outer rays Ro. For example, in a case where a terahertz pulse light whose curvature radius r is 10mm and beam radius 2a is 1mm is emitted, an optical path difference δ is calculated as 13 µm. Accordingly, a difference of 13 µm in the paint film thickness may not be measured. In other words, a pulse width of the terahertz echo pulse reflected on the spherical surface having a radius of 10mm is approximately 200fs (=2n δ /c) longer than the pulse width of the terahertz echo pulse reflected on a flat surface of an object, which results in reducing the optical resolution for measuring the paint thickness.

Because the known paint film thickness measuring device receives the terahertz echo pulse reflected on the object by a detecting portion without modification, when the terahertz echo pulse reflected on the nonplanar surface is received, the level of the optical resolution is reduced.

A need thus exists to provide a non-contacting type paint film thickness measuring device for measuring a paint film thickness of an object, even a paint film thickness of a nonplanar object, without elongating a pulse width of a terahertz echo pulse and without reducing a level of an optical resolution for paint film measurement.

### SUMMARY

According to an aspect of this disclosure, a non-contacting type paint film thickness measuring device comprises a paint film thickness measuring unit including terahertz pulse light generating means for generating a terahertz pulse light, a first optical system for collimating and focusing an incident terahertz pulse light that is the terahertz pulse light generated by the terahertz pulse light generating means to an object whose paint film thickness is measured, a second optical system for receiving a terahertz echo pulse that is the incident terahertz pulse light collimated and focused to the object in the first optical system and reflected at the object, pulse width shortening means for shortening a pulse width of the terahertz echo pulse and detecting means for detecting electric field amplitude-time resolved waveform of the terahertz echo pulse whose pulse width is shortened by the pulse width shortening means.

Because of the pulse width shortening means for shortening the pulse width of the terahertz echo pulse, the elongated pulse width of the terahertz echo pulse reflected on the nonplanar surface of the object may be shortened, as a result, the level of the optical resolution may not be reduced.

According to another aspect of this disclosure, the pulse width shortening means is an aperture located on an optical path between the object and the detecting means.

Because the terahertz echo pulse other than the specular-reflected terahertz echo pulse may be removed by use of the aperture, the pulse width of the terahertz echo pulse reflected on the nonplanar object may be shortened using the paint film thickness measuring unit being downsized.

According to a further aspect of this disclosure, the aperture is a variable type aperture.

Because of the variable aperture, the opening of the aperture may be set so as to correspond to a desired optical resolution for various types of the objects.

According to a yet further aspect of this disclosure, the non-contacting type paint film thickness measuring device further includes a positioning control mechanism for controlling a relative positional relation between the paint film thickness measuring unit and the object so as to be a predetermined positional relation by moving at least one of the paint film thickness measuring unit and the object.

Thus, the positioning control mechanism controls the relative positional relation between the paint film thickness measuring unit and the object in such a way that at least one of the unit and the object is moved so that the relative position therebetween is set to a predetermined position, as a result, a relative positional relation between the paint film thickness measuring unit and the object may always be set to a predetermined distance. Accordingly, each time when the paint film thickness is measured, the detecting means may appropriately receive the specular-reflected terahertz echo pulse from the object.

### BRIEF DESCRIPTION OF THE DRAWINGS

The foregoing and additional features and characteristics of this disclosure will become more apparent from the following detailed description considered with the reference to the accompanying drawings, wherein:

Fig. 1 illustrates a schematic configuration diagram schematically indicating a non-contacting type paint film thickness measuring device of a first embodiment;

Fig. 2 illustrates a diagram of electric field amplitude-time resolved waveform;

Fig. 3 illustrates a schematic configuration diagram schematically indicating a non-contacting type paint film thickness measuring device of a second embodiment;

Fig. 4A illustrates an example of a cross section of multilayer paint films of a automobile body paint for expressing a paint film thickness measuring principle related to a prior art;

Fig. 4B illustrates an electric field intensity in time-series of the terahertz echo pulse light measured at the paint film illustrated in Fig. 4A for expressing the paint film thickness measuring principle related to the prior art;

Fig. 5 illustrates a graph for explaining a relation between a pulse width of the terahertz echo pulse and an optical resolution of a paint film thickness measurement; and

Fig. 6 illustrates a schematic diagram for explaining an optical path difference generated when a terahertz pulse light is emitted to a nonplanar surface.

### DETAILED DESCRIPTION

Embodiments will be described in accordance with the attached drawings.

(First embodiment)

As indicated in Fig. 1, the non-contacting type paint film thickness measuring device in the first embodiment includes a paint film thickness measuring unit 17 having a terahertz pulse light generating means 4, a first optical system 5, a second optical system 6, a detecting means 7 and a pulse width shortening means 15. The terahertz pulse light generating means 4 generates a terahertz pulse light Lt, and the first optical system 5 collimates and focuses an incident terahertz pulse light, which is the terahertz pulse light Lt generated by the terahertz pulse light generating means 4, to an object 20 whose paint film thickness is measured. The second optical system 6 receives a terahertz echo pulse Lte that is the incident terahertz pulse light Lt collimated and focused to the object 20 in the first optical system 5 and reflected on the object 20, the detecting means 7 detects electric field amplitude-time resolved waveform of the terahertz echo pulse Lte, and the pulse width shortening means 15 shortens a pulse width of the terahertz echo pulse Lte.

The paint film thickness measuring unit 17 further includes an ultrashort optical pulse light source 1, a light splitting means 2 and a light delaying means 3. The ultrashort optical pulse light source 1 generates a pumping light Lpu and a probe light Lpr, the pumping light Lpu used for exciting (pumping) the terahertz pulse light generating means 4 and the probe light Lpr used for detecting the electric field amplitude-time resolved waveform of the terahertz echo pulse Lte at the detecting means. The light splitting means 2 splits an ultrashort optical pulse laser Lo generated at the ultrashort optical pulse light source 1 into the pumping light Lpu and the probe light Lpr, and the light delaying means 3 controls the probe light Lpr so as to be delayed.

The ultrashort optical pulse light source 1 is an Er doped fiber laser having SHG crystal. The ultrashort optical pulse light source 1 generates the ultrashort optical pulse laser L0 including a basic wave pulse having a pulse width of 17fs, a repetition frequency of 50MHz, a central wavelength of 1550nm and an output of 100mW. The ultra short optical pulse laser L0 further includes a second harmonic pulse having a central wavelength of 780nm and an output of 10m W.

The ultrashort optical pulse light source 1 may not be limited to the above-mentioned configuration, and a Yb doped fiber laser or a titanium-sapphire laser may also be used as the ultrashort optical pulse light source 1,

The repetition frequency may be increased in order to increase a SN ratio of the electric field amplitude-time resolved waveform of the terahertz echo pulse Lte, however, when the repetition frequency is too large, a pulse interval is narrowed, accordingly a scan range within a time range is also narrowed. A laser light whose repetition frequency is set to an appropriate value for an object whose paint film thickness is measured needs to be used.

The pulse width may be short as far as possible in order to increase an optical resolution for measuring the paint film thickness.

The light splitting means 2 is a diachronic mirror for splitting the ultrashort optical pulse laser L0 into a pumping light Lpu (basic wave pulse) having a wave length of 1550nm and a probe light Lpr (second harmonic pulse) having a wave length of 780nm. In a case where the ultrashort optical pulse light source 1 is a laser device such as a titanium-sapphire laser emitting a laser having a single-wavelength, a beam splitter is used as the light splitting means 2.

The light delaying means 3 includes a corner mirror 31 and a moving means 32 for moving the corner mirror 31 in a direction indicated by an arrow A. The light delaying means 3 controls the arrival time of the probe light Lpr, split from the pumping light Lpu by means of the diachronic mirror, relative to the terahertz pulse light Lt generated from the pumping light Lpu. The moving means 32 is controlled by a personal computer 11.

The pumping light Lpu is modulated while passing through a modulator 8. The pumping light Lpu may large as long as it is modulated to be less than 1/10 of the repetition frequency of the pumping light Lpu. In the embodiment, a chopper is used as the modulator 8, and the pumping light Lpu is modulated so as to be 1kHz. An acousto-optical modulator (AOM) or an electro-optical modulator (EOM) may be used as the modulator 8 in order to obtain a high-speed modulation.

The modulated pumping light Lpu is collected to the terahertz pulse light generating means 4 by means of a lens 9. The terahertz pulse light generating means 4 may be an organic nonlinear crystal such as a DAST (4-dimethylamino-N-methyl-4 stilbazolium tosylate). In the embodiment, the DAST 4 includes two surfaces 41 and 42 each positioned orthogonally to an axis C, a distance between the surfaces 41 and 42 (e.g., a thickness of the DAST) being 0.1mm. When the pumping light Lpu is emitted to the DAST 4, a terahertz pulse light Lt is generated by an effect χ (2) of the crystal.

The first optical system 5 includes two off-axis paraboloidal mirrors 51 and 52. The off-axis paraboloidal mirror 51 collimates the terahertz pulse light Lt emitted from the DAST 4, and the off axis paraboloidal mirror 52 guides and collects (e.g.,focuses) the collimated terahertz pulse light Lt to the object 20.

The second optical system 6 includes two off-axis paraboloidal mirrors 61 and 62. The off-axis paraboloidal mirror 61 collimates the terahertz echo pulse Lte that is the incident terahertz pulse light Lt reflected on the object 20, and the off-axis paraboloidal mirror 62 guides and collects (e.g., focuses) the collimated terahertz echo pulse Lte to the detecting means 7.

The pulse width shortening means 15 is located on an optical path between the off-axis paraboloidal mirrors 61 and 62 is an aperture. An opening of the aperture 15 is set so as to be identical to a beam radius of the terahertz echo pulse Lte indicated with dotted lines in Fig. 1. The dotted lines are a ray-tracing supposing that the terahertz pulse light is emitted to a flat surface of the object, When the terahertz pulse light is emitted to a nonplanar surface of the object 20 as illustrated in Fig. 1, the beam radius of the terahertz echo pulse Lte may be larger than the dotted lines at the position where the aperture 15 is provided. The aperture may be a variable type aperture, (e.g., a variable aperture).

In the embodiments, the aperture is used as the pulse width shortening means 15, however, a grating compressor, a prism compressor or the like may be used alternatively.

The detecting means 7 includes a silicon lens 71 and a photoconductive switch 72. The photoconductive switch 72 has a dipole antenna formed on a low-temperature growth GaAs board. The detecting means 7 obtains the electric field amplitude-time resolved waveform of the terahertz echo pulse Lte inputted in the dipole antenna whose gap portion is excited by the probe light Lpr.

An apparatus indicated by a numeral 16 is a pre-amplifier for amplifying an electric signal outputted by the photoconductive switch 72.

An apparatus indicated by a numeral 10 is a lock-in amplifier for extracting certain elements from the signal detected by the photoconductive switch 72 and amplifying the extracted elements. The elements to be extracted are synchronized with a signal modulated by a chopper 8.

An apparatus indicated by a numeral 11 is the personal computer for memorizing the positional information of the light delaying means 3 and signals from the lock-in amplifier 10. The personal computer 11 also has a function for controlling the moving means 32 of the light delaying means 3 and the lock-in amplifier 10.

An actuation of the non-contacting type paint film thickness measuring device will be explained.

The ultrashort optical pulse laser Lo generated at the ultrashort optical pulse light source 1 is split into the pumping light Lpu and the probe light Lpr by the diachronic mirror 2.

After intensity-modulation at the chopper 8, the pumping light Lpu is collected by the lens 9 and emitted toward the DAST 4 in an axis c thereof. The terahertz pulse light Lt is generated by an effect χ (2) of the DAST 4.

After being collimated at the off-axis paraboloidal mirror 51 of the incidence optics 5, the terahertz pulse light Lt is collected to the object 20 by means of the off-axis paraboloidal mirror 52. The terahertz pulse light Lt is reflected on interfaces of the object 20 each of which has unique refractive index, and the reflected light becomes the terahertz echo pulse light Lte that is indicated by the dotted lines.

The terahertz echo pulse light Lte reflected at the object 20 is collimated at the off-axis paraboloidal mirror 61 of the second optical system 6, then the terahertz echo pulse Lte that is not specular-reflected on the object 20 is removed by the aperture 15, and the terahertz echo pulse light Lte indicated with the dotted lines is collected to the photoconductive switch 72 by means of the off-axis paraboloidal mirror 62 via the silicon lens 71.

The probe light Lpr split from the ultrashort optical pulse laser Lo at diachronic mirror 2 passes the light delaying means 3 and is collected to the photoconductive switch 72 by means of the lens 19. The photoconductive switch 72 obtains electric field amplitude-time resolved waveform of the terahertz echo pulse Lte by scanning the light delaying means 3. Specifically, a signal of the photoconductive switch 72 is amplified by means of the amplifier 16, and the amplified signal is further amplified by means of the lock-in amplifier 10 and stored in the personal computer 11 as data in order to obtain the electric field amplitude-time resolved waveform of the terahertz echo pulse light Lte as illustrated in Fig. 4B.

When a rapid scanning type-light delaying means 3 is used, the personal computer 11 may be synchronized with a cycle of a delay sweep at the light delaying means 3 in order to improve a speed of obtaining the data.

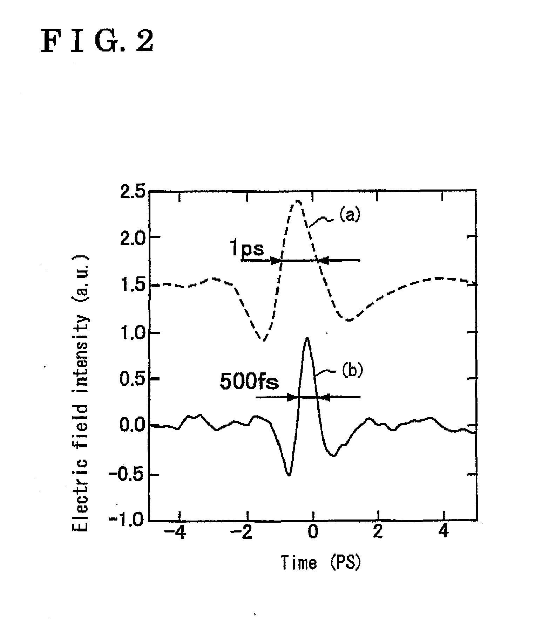

Next, experimental results of a use of the non-contacting type paint film thickness measuring device will be explained. In this experiment, a convex mirror having a curvature radius of 10 mm is used, and results are shown in a graph of Fig. 2. A line (a) in the graph indicates a terahertz echo pulse Lte obtained by the non-contacting type paint film thickness measuring device not having the aperture 15, and a line (b) in the graph indicates a terahertz echo pulse Lte obtained by the non-contacting type paint film thickness measuring device having the aperture 15. The pulse width of the terahertz echo pulse Lte obtained by use of the aperture 15 (line (b)) is 500fs that is approximately half of the pulse width of the terahertz echo pulse Lte without using the aperture 15 (the pulse width is 1ps in the line (a),). Thus, although the pulse width of the terahertz echo pulse Lte reflected on the nonplanar object 20 may be elongated to 1ps, the elongated pulse width is shortened so as to be 500fs by use of the aperture 15.

(Second embodiment)

In a second embodiment, the non-contacting type paint film thickness measuring device explained in the first embodiment is used, but a positioning control mechanism is added to the device. Elements in the second embodiment, which are identical to that of the device in the first embodiment, are indicated by numerals used for the corresponding elements in the first embodiment, and explanations of the identical elements are omitted.

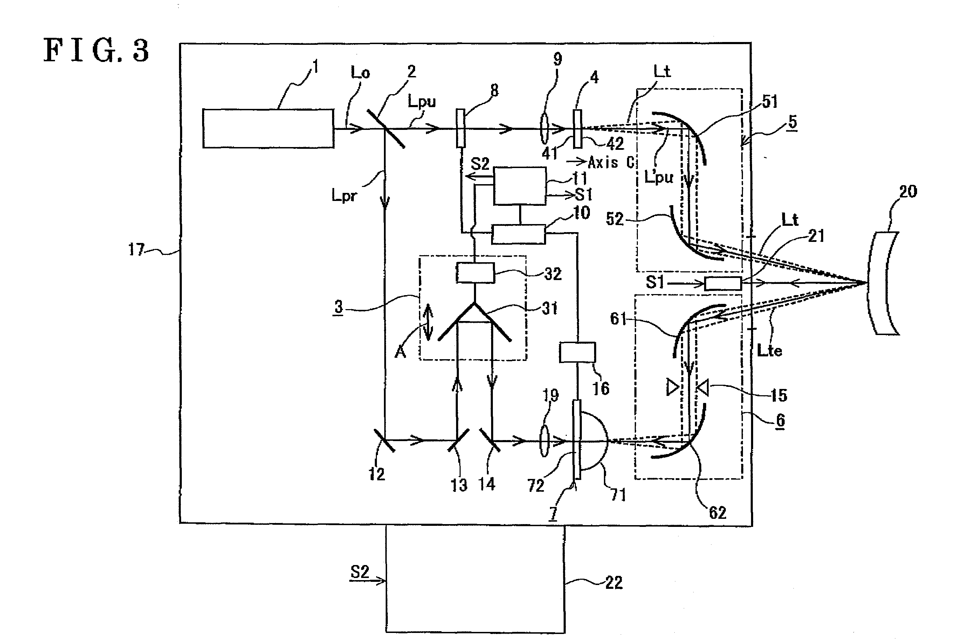

As illustrated in Fig. 3, the non-contacting type paint film thickness measuring device in the second embodiment includes a micrometer 21 in the paint film thickness measuring unit 17 and a position and posture controlling means 22 to which the paint film thickness measuring unit 17 is mounted. The macrometer 21, the position and posture controlling means 22 and the personal computer 11 configures the positioning control mechanism.

The micrometer 21 is an Electro-Optical Distance Measurement or the like for measuring a distance between the paint film thickness measuring unit 17 and the object 20, and the measured distance is transmitted to the personal computer 11.

The position and posture controlling means 22 is an XYZ θ axis stage or the like for moving (e.g., changing a position and a posture) of the paint film thickness measuring unit 17 under a control of the personal computer 11. The position and posture controlling means 22 may move the object 20 (e.g., change a position and a posture of the object 20), or may move both of the paint film thickness measuring unit 17 and the object 20 (e.g., change a position and a posture of each of the object 20 and the unit 17), in order to control a relative positional relation between the paint film thickness measuring unit 17 and the object 20.

The position and posture controlling means 22 may be a robot hand controlled by a computer.

The personal computer 11 controls the actuation of the position and posture controlling means 22 (e.g., XYZ θ axis stage) in such a way that a distance calculated on the basis of the distance measured by the micrometer 21 becomes identical to a predetermined distance, and the signals outputted by the detecting means 7 reaches a maximum,

Thus, because the non-contacting type paint film thickness measuring device has the positioning control mechanism configured by the micrometer 21, the position and posture controlling means 22 and the personal computer 11, a relative positional relation between the paint film thickness measuring unit 17 and the object 20 may always be set to the predetermined distance. Accordingly, each time when the paint film thickness is measured, the detecting means may appropriately receive the specular-reflected terahertz echo pulse from the object 20.
A non-contacting type paint film thickness measuring device includes a paint film thickness measuring unit (17) having a terahertz pulse light generating portion (1) for generating a terahertz pulse light, a first optical system (5) for collimating and focusing an incident terahertz pulse light that is the terahertz pulse light generated by the terahertz pulse light generating portion (1) to an object (20) whose paint film thickness is measured, a second optical system (6) for receiving a terahertz echo pulse that is the incident terahertz pulse light collimated and focused to the object (20) in the first optical system (5) and reflected at the object (20), a pulse width shortening portion (15) for shortening a pulse width of the terahertz echo pulse, and a detecting portion (7) for detecting electric field amplitude-time resolved waveform of the terahertz echo pulse whose pulse width is shortened by the pulse width shortening portion (15).

## Claims

1. A non-contacting type paint film thickness measuring device comprising:
a paint film thickness measuring unit (17) including;
terahertz pulse light generating means (1) for generating a terahertz pulse light,
a first optical system (5) for collimating and focusing an incident terahertz pulse light that is the terahertz pulse light generated by the terahertz pulse light generating means (1) to an object (20) whose paint film thickness is measured,
a second optical system (6) for receiving a terahertz echo pulse that is the incident terahertz pulse light collimated and focused to the object (20) in the first optical system (5) and reflected at the object (20),
pulse width shortening means (15) for shortening a pulse width of the terahertz echo pulse, and
detecting means (7) for detecting electric field amplitude-time resolved waveform of the terahertz echo pulse whose pulse width is shortened by the pulse width shortening means (15).

2. The non-contacting type paint film thickness measuring device according to Claim 1, wherein the pulse width shortening means (15) is an aperture (15) located on an optical path between the object (20) and the detecting means (7).

3. The non-contacting type paint film thickness measuring device according to Claim 1, wherein the aperture (15) is a variable type aperture (15).

4. The non-contacting type paint film thickness measuring device according to any one of Claims 1, 2 and 3 further includes a positioning control mechanism (11, 21, 22) for controlling a relative positional relation between the paint film thickness measuring unit (17) and the object (20) so as to be a predetermined positional relation by moving at least one of the paint film thickness measuring unit (17) and the object (20).
